(19)

Europäisches Patentamt
European Patent Office
Office européen des brevets

(11) **EP 3 418 335 A1**

(12) **EUROPEAN PATENT APPLICATION**

(43) Date of publication:
**26.12.2018 Bulletin 2018/52**

(21) Application number: **18178976.9**

(22) Date of filing: **21.06.2018**

(51) Int Cl.:
*C09D 11/033* (2014.01)     *C09D 11/10* (2014.01)
*C09D 11/30* (2014.01)     *C09D 11/32* (2014.01)
*C09D 11/322* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2017 JP 2017121859**

(71) Applicant: **CANON KABUSHIKI KAISHA Ohta-ku Tokyo 146-8501 (JP)**

(72) Inventors:
• **KAWAMURA, Hidetaka**
  **Tokyo, 146-8501 (JP)**

• **TERADA, Masahiro**
  **Tokyo, 146-8501 (JP)**
• **TAYA, Akihiro**
  **Tokyo, 146-8501 (JP)**
• **MASADA, Yohei**
  **Tokyo, 146-8501 (JP)**
• **OOTSUKA, Masanobu**
  **Tokyo, 146-8501 (JP)**
• **AOTANI, Takaharu**
  **Tokyo, 146-8501 (JP)**
• **YOSHIMASA, Yutaka**
  **Tokyo, 146-8501 (JP)**
• **KOIKE, Shoji**
  **Tokyo, 146-8501 (JP)**

(74) Representative: **TBK Bavariaring 4-6 80336 München (DE)**

(54) **AQUEOUS INK, INK CARTRIDGE AND IMAGE RECORDING METHOD**

(57)     An aqueous inkjet ink of the present invention contains: a solvent A; a resin particle; and a color material, wherein the solvent A is an alcohol having a water solubility at 20°C of 5% by mass or less, the vapor pressure at 20°C of 0.5 mmHg or less, and the surface tension at 20°C of 30 mN/m or more; the ratio of the content (% by mass) of the solvent A to the water solubility (% by mass) of the solvent A at 20°C is 0.7 or more and 7.0 or less; and the SP value of the resin particle is 8.1 $(cal/cm^3)^{0.5}$ or more and 9.7 $(cal/cm^3)^{0.5}$ or less.

EP 3 418 335 A1

**Description**

BACKGROUND OF THE INVENTION

Field of the Invention

The present invention relates to an aqueous ink, an ink cartridge, and an image recording method.

Description of the Related Art

Image recording methods employing inkjet systems have advantages such as low noise, low running cost, and also easy colorization. For this reason, the methods are widely used at present in not only printers for home use but also copying machines and the commercial printing industry in which high-speed printing is required.
In the image recording methods employing inkjet systems, micrifying ink liquid droplets has been advanced to enhance image quality, and further enhancement in image quality has been required in recent years. It is improvement in intermittent ejection ability (initial ejection stability) that is considered especially to be an important problem in such a situation. When ink is not ejected from some ejection ports of a recording head over a long period of time and the recovery operation of a recording head is not performed, water and the like in the ink evaporate from ejection ports, resulting in the thickening of the ink and the adherence of the ink to nozzles. Then, when ejecting the ink again from the ejection ports is attempted, the first ejection of the ink becomes unstable, or the ink is ejected no longer. Images may be disturbed easily.
Now, an image recording method employing a line system using line type recording heads wider than recording media (paper) has come to be adopted in recent years. In the image recording method employing a line system, ink is applied to a recording medium conveyed under a fixed recording head, and an image is recorded in so-called one pass. The image recording method employing a line system has the advantage of enabling printing at a higher speed than an image recording method employing a serial system in which an image is recorded by conveying a recording medium with a recording head moving right and left.
Meanwhile, while a recording head (nozzle) passes through one part of a recording medium a plurality of times in the case of a serial system, a recording head (nozzle) passes through one part of a recording medium only once in a line system. For this reason, even if one nozzle has trouble in a serial system, other nozzles can cover the nozzle to suppress the decrease in image quality. Meanwhile, when trouble occurs to one nozzle in a line system, it becomes easy that image quality decreases immediately. Therefore, it can be deemed that improvement in intermittent ejection ability is a very important problem in an image recording method employing a line system.
An inkjet ink, for example, using a liquid medium containing an alkylene glycol having seven or more carbon atoms is proposed to prevent clogging in nozzles of recording heads (Japanese Patent Application Laid-Open No. H03-255171). An inkjet ink containing a larger amount of an ethylene glycol-based organic solvent than the other organic solvents is proposed (Japanese Patent Application Laid-Open No. 2000-297237). Additionally, an inkjet ink in which a poorly water-soluble compound as an evaporation prevention agent and an easily water-soluble compound are blended at a predetermined ratio is proposed (Japanese Patent Application Laid-Open No. 2015-7175).
It is necessary to be able to print a large number of images at a lower cost in the commercial printing industry. For this reason, it is desired to be able to record high-quality images having high optical densities on thin plain paper which has no ink receiving layer, besides low-priced thin printing paper.
When an image is recorded on a recording medium such as plain paper, ink applied to the recording medium may attach to members such as a conveyance roller and accumulate. The ink attaching and accumulating on members such as a conveyance roller may attach to the printing side of another recording medium, resulting in stains. In particular, a printer for commercial printing prints still more sheets per job than a home printer. Therefore, it is required not to attach ink to members such as a conveyance roller or accumulate the ink by enhancing the fixability of the ink. For example, an inkjet ink enhanced in fixability by blending a predetermined polyurethane resin particle and rapidly forming a film on a recording medium is proposed (Japanese Patent No. 5196235).

SUMMARY OF THE INVENTION

The present invention is directed to providing an aqueous ink that is excellent in intermittent ejection ability and fixability and enables recording images excellent in colorability. The present invention is directed to providing an ink cartridge and an image recording method, using the aqueous ink.
According to an aspect of the present invention, an aqueous inkjet ink, containing: a solvent A; a resin particle; and a color material, wherein the solvent A is an alcohol having a water solubility at 20°C of 5% by mass or less, a vapor pressure at 20°C of 0.5 mmHg or less, and a surface tension at 20°C of 30 mN/m or more; the ratio of the content (% by mass) of the solvent A to the water solubility (% by mass) of the solvent A at 20°C is 0.7 or more and 7.0 or less; and the SP value of the resin particle is 8.1 $(cal/cm^3)^{0.5}$ or more and 9.7 $(cal/cm^3)^{0.5}$ or less is provided.

According to another aspect of the present invention, an ink cartridge including: an ink; and an ink-containing part for containing the ink, wherein the ink is the above-mentioned aqueous ink is provided.

According to another aspect of the present invention, an image recording method including: an ink-applying step of ejecting the above-mentioned aqueous ink from an inkjet recording head and applying the aqueous ink to a recording medium conveyed under the recording head is provided.

Further features of the present invention will become apparent from the following description of exemplary embodiments with reference to the attached drawings.

BRIEF DESCRIPTION OF THE DRAWINGS

FIG. 1 is a schematic diagram illustrating an example of an image recording apparatus used in an image recording method of the present invention.
FIG. 2 is a figure (graph) schematically illustrating the relationship between the SP value of a resin particle and the compatibility of the resin particle with a poorly water-soluble compound.

DESCRIPTION OF THE EMBODIMENTS

Preferred embodiments of the present invention will now be described in detail in accordance with the accompanying drawings.

The present inventors evaluated the intermittent ejection ability of conventional inks. Consequently, it became clear that both of the inks proposed in Japanese Patent Application Laid-Open No. H03-255171 and Japanese Patent Application Laid-Open No. 2000-297237 were thickened on nozzle tips over time when water began to evaporate, resulting in a marked decrease in intermittent ejection ability. Meanwhile, it became clear that the ink proposed in Japanese Patent Application Laid-Open No. 2015-7175 exhibited effective intermittent ejection ability. However, when the ink proposed by Japanese Patent Application Laid-Open No. 2015-7175 was evaluated using a printer for commercial printing provided with a conveyance roller, it was easy to deposit the ink on the surface of the conveyance roller, and it became clear that fixability was insufficient.

Then, when a polyurethane resin particle blended in the ink proposed in Japanese Patent No. 5196235 were added to the ink proposed by Japanese Patent Application Laid-Open No. 2015-7175 to enhance the fixability of the ink, it became clear that the intermittent ejection ability decreased markedly. This is presumed to be because a poorly water-soluble compound is compatible with the polyurethane resin particle. The poorly water-soluble compound separates from the ink on the tips of non-printing nozzles to form oil films, resulting in the suppression of the evaporation of water in the ink. However, it is considered that when the poorly water-soluble compound has become compatible with the polyurethane resin particle, the concentration of the poorly water-soluble compound in the ink decreases, it becomes difficult for oil films to be formed, resulting in a decrease in intermittent ejection ability.

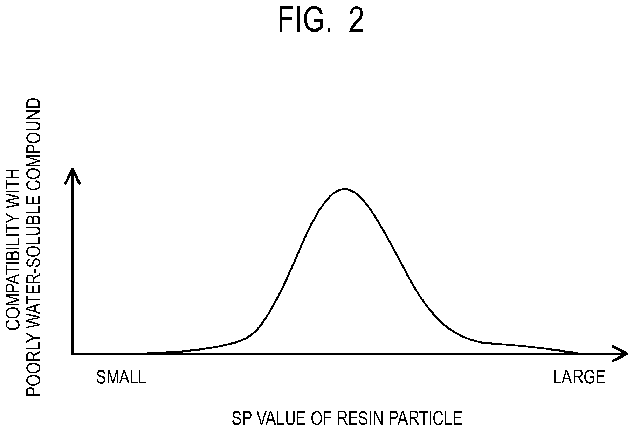

FIG. 2 is a figure (graph) schematically illustrating the relationship between the SP value of a resin particle and the compatibility of the resin particle with a poorly water-soluble compound. As illustrated in FIG. 2, a resin particle having an SP value (soluble parameter) in a specific range is compatible with a poorly water-soluble compound. Meanwhile, a resin particle having an SP value out of the specific range is not compatible with the poorly water-soluble compound. It is considered that because the SP value of the polyurethane resin particle used for the ink proposed in Japanese Patent No. 5196235 is in a specific range, the polyurethane resin particle exhibits high compatibility with the poorly water-soluble compound.

Therefore, the present inventors have examined earnestly to solve the above-mentioned problem and completed the present invention.

The present invention will be described in detail hereinafter by mentioning preferable embodiments. When a compound is a salt in the present invention, the salt exists while dissociating into ions in an ink, but this is expressed as "containing a salt" for convenience. An aqueous inkjet ink may be described as just an "ink." The physical property values are values at 20°C unless otherwise specified.

<Aqueous Ink>

An ink of the present invention is an aqueous inkjet ink, containing a solvent A, a resin particle and a color material. Components constituting the ink of the present invention, the physical properties of the ink, and the like will be described in detail hereinafter.

(Solvent A)

A solvent A for use in the ink of the present invention is an alcohol having a water solubility at 20°C of 5% by mass or less, a vapor pressure at 20°C of 0.5 mmHg or less, and a surface tension at 20°C of 30 mN/m or more. This solvent A is a so-called poorly water-soluble compound (poorly water-soluble solvent), which is poorly dissolved in water. The solvent A is a component that suppresses the evaporation of water and prevents the thickening of the ink and adherence on nozzle tips due to dryness to enhance intermittent ejection ability. When water in the ink evaporates and the concentration increases, the solvent A cannot be completely dissolved in the ink to separate from the ink. Because the tips of non-printing nozzles are exposed to the atmosphere, water in the ink volatilizes particularly easily. Therefore, oil films are formed on the tips of the non-printing nozzles by a solvent A separating from the ink, resulting in the suppression of the further evaporation of water in the ink. Hence, the ink can be ejected stably over a long period of time, and the intermittent ejection ability can be enhanced at the same time.

The water solubility of the solvent A at 20°C is 5% by mass or less, preferably 0.1% by mass or more and 3% by mass or less, more preferably 0.5% by mass or more and 3% by mass or less, and particularly preferably 1% by mass or more and 3% by mass or less. The solvent A can be dissolved in the ink in an initial condition (condition before water evaporates) in a better condition when the water solubility of the solvent A is 0.5% by mass or more.

The solvent A can be a monohydric alcohol having a benzene ring. When a monohydric alcohol having a benzene ring is used as the solvent A, a pigment can be dispersed stably. Therefore, the alcohol is preferable. The alcoholic hydroxyl group may be bonded to the benzene ring directly or through another functional group. The solvent A can be at least one selected from the group consisting of phenoxyalkanols, phenylalkanols and aminophenols.

The vapor pressure of the solvent A at 20°C is 0.5 mmHg or less, and the surface tension at 20°C is 30 mN/m or more. When the vapor pressure is more than 0.5 mmHg, oil films formed on ejection ports evaporate, and the effect of suppressing water evaporation becomes weak. When the surface tension is less than 30 mN/m, the intermolecular force is weak. Therefore, oil films cannot be formed. The vapor pressure of the solvent A at 20°C can be 0.2 mmHg or less. The surface tension of the solvent A at 20°C can be 36 mN/m or more. Specific examples of the solvent A are illustrated in Table 1. In particular, the solvent A can be at least one selected from the group consisting of benzyl alcohol, 2-phenoxyethanol, phenethyl alcohol, 1-phenoxy-2-propanol and 1-phenyl-2-propanol.

Table 1: Specific examples of solvent A

|  | Water solubility (% by mass) | Vapor pressure (mmHg) | Surface tension (mN/m) | Log partition coefficient |
|---|---|---|---|---|
| 4-Phenyl-1-butanol | 0.1 | 0 | 38.3 | 2.4 |
| 3-Phenyl-1-propanol | 0.568 | 0 | 38.9 | 1.88 |
| 1-Phenyl-2-propanol | 0.58 | 0.1 | 37.3 | 1.71 |
| 1-Phenoxy-2-propanol | 1.1 | 0 | 37.7 | 1.51 |
| Phenethyl alcohol | 2.2 | 0.1 | 39.7 | 1.36 |
| 2-Phenoxyethanol | 2.67 | 0 | 40 | 1.16 |
| Benzyl alcohol | 4.29 | 0.1 | 39 | 1.03 |

The ink of the present invention may contain at least one solvent A, and can contain only one solvent A. The ratio of the content (% by mass) of the solvent A in the ink to the water solubility (% by mass) of the solvent A at 20°C is 0.7 or more and 7.0 or less. For example, the case where solvent A is "2-phenoxyethanol" is assumed. In this case, because the water solubility of "2-phenoxyethanol" at 20°C is "2.67% by mass", 1.87 to 18.69 g of "2-phenoxyethanol" is contained in 100 g of the ink. When a plurality of solvents A are contained in the ink, each solvent A needs to satisfy the above-mentioned ratio.

Sufficient volumes of oil films can be formed on the tips of non-printing nozzles by adjusting the above-mentioned ratio to 0.7 or more, and the evaporation of water in the ink can be suppressed. The ratio of the content (% by mass) of the solvent A in the ink to the water solubility (% by mass) of the solvent A at 20°C is preferably 1.0 or more, more preferably 2.0 or more, and particularly preferably 3.0 or more. Because the solvent A dissolves in components (for example, a solvent B mentioned below) other than water in the ink, the solvent A in a higher content than the water solubility can be dissolved in the ink. However, when the above-mentioned ratio is more than 7.0, an undissolved solvent A remains easily in nozzles, resulting in causing poor ejection easily. For this reason, the ratio of the content (% by mass) of the solvent A in the ink is to the water solubility (% by mass) of the solvent A at 20°C can be 5.0 or less.

(Resin Particle)

The present inventors have examined, and as a result, it has become clear that it is effective to use a resin particle the SP value of which is smaller to some degree than that of a conventional polyurethane resin particle used for the ink proposed in Japanese Patent No. 5196235. Specifically, the SP value of the resin particle used for the ink of the present invention is 8.1 $(cal/cm^3)^{0.5}$ or more and 9.7 $(cal/cm^3)^{0.5}$ or less. When the SP value of the resin particle is less than 8.1 $(cal/cm^3)^{0.5}$, the hydrophobicity of the resin is high. Therefore, it is difficult to disperse the resin particle in water.

The resin particle may have an SP value in the above-mentioned range. Examples of the resin particle include a polyolefin resin particle, a vinyl chloride resin particle, a chloroprene resin particle and a polyester resin particle. Example of the polyolefin resin particle include, under the following trade name, ZAIKTHENE (manufactured by Sumitomo Seika Chemicals Company Limited). Examples of the vinyl chloride resin particle include, under the following trade names, VINYBLAN 735, 745, 755, and 150 (manufactured by Nissin Chemical Industry Co., Ltd.). Examples of the chloroprene resin particle include, under the following trade names, LA-50, LM-61, LV-60N (manufactured by Denka Company Limited).

The SP value (solubility parameter) is a value introduced by Hildebrand and defined by the regular solution theory, and is a physical property value used as a standard of compatibility.

When the evaporation energy of a liquid per mol is $\Delta E_V$ [unit: kcal●mol$^{-1}$] and the molar volume thereof is Vm [unit: cm$^3$●mol$^{-1}$], the SP value $\delta$ [unit:(cal/cm$^3$)$^{0.5}$] is defined by the following Expression (A):

$$\delta = (\Delta E_V/Vm)^{1/2} \bullet\bullet\bullet(A)$$

The SP value can be experimentally measured by the turbidimetric titration method. The turbidimetric titration method is advocated by K. W. Suh, D. H. Clarke et al in the following literatures 1, 2 and the like.

[Literature 1]: K. W. Suh, D. H. Clarke, J. Polym. Sci., 1671, 1967
[Literature 2]: K. W. Suh, J. M. Corbett. J. Appl. Poym. Sci., 2359, 1968

According to the above-mentioned turbidimetric titration method, the SP value can be measured, for example, according to the following procedures (Procedures 1 and 2).

[Procedure 1]: Hydrogenation of Hydrophilic group of Resin Particle (Preparation of SP Value Measurement Sample)

(1) A dialysis membrane (trade name "MWCO's0.5m of 3.5-5kD Biotech RC", manufactured by Spectrum Laboratories, Inc.) is charged with 200 mL of a resin particle dispersion, and is immersed in 10 L of hydrochloric acid (pH 3 ± 0.5). Cations such as amines and alkaline metals are substituted by hydrogen ions by immersing the resin particle dispersion with stirring magnetically for 24 hours.
(2) The resin particle is immersed in 12 L of ion exchange water (pH 7 ± 0.5) with the resin particle in the dialysis membrane. The resin particle is immersed with stirring magnetically for 24 hours, resulting in neutralization.
(3) The ion exchange water is replaced, and the resin particle is then immersed with stirring magnetically for another 6 hours. It is confirmed that the pH of the ion exchange water is 7 ± 0.5.
(4) Water is removed with stirring magnetically by immersing the resin particle in 2 L of ethanol for 8 hours.
(5) A dried 500 mL beaker is charged with the resin particle taken out of the dialysis membrane, and ethanol is removed by vacuum-drying the resin particle for 6 hours with the resin particle maintained at 80°C.
(6) A powder obtained by grinding the completely dried resin particle is used as a dry resin particle sample.

[Procedure 2]: Measurement of SP Value

(1) 0.500 g ± 0.005 g of the dry resin particle sample is weighed in a 50 mL Erlenmeyer flask.
(2) 10 mL of tetrahydrofuran (THF) is added thereto, and the dry resin particle sample is dissolved to prepare a sample solution.
(3) The prepared sample solution is cooled with stirring magnetically, and the turbidimetric point (mL) is titrated with n-hexane with the sample solution maintained at 25°C.

Specifically, when the Erlenmeyer flask containing the sample solution is placed on a Mincho character (12 pt) printed on plain paper by an electrophotographic system with the Erlenmeyer flask maintained at 25°C, and viewed from the top, the time the character is blurred by the turbidity of the solution layer and cannot be read is defined as a titrating point.

(4) By the same procedure, the turbidimetric point (mL) of ion exchange water is titrated.

(5) According to the following mathematical Expressions (1) to (7), the SP value $\delta$ $(cal/cm^3)^{1/2}$ of the resin particle is calculated.

$$\phi_{SL} = \frac{10}{10 + L} \quad \cdots (1)$$

$$\phi_L = \frac{L}{10 + L} \quad \cdots (2)$$

$$\phi_{SH} = \frac{10}{10 + H} \quad \cdots (3)$$

$$\phi_H = \frac{H}{10 + H} \quad \cdots (4)$$

$$V_{SL} = \frac{V_S \times V_L}{\phi_{SL} \times V_L + \phi_L \times V_S} \quad \cdots (5)$$

$$V_{SH} = \frac{V_S \times V_H}{\phi_{SH} \times V_H + \phi_H \times V_S} \quad \cdots (6)$$

$$\delta = \frac{\sqrt{V_{SL}} \times \delta_{SL} + \sqrt{V_{SH}} \times \delta_{SH}}{\sqrt{V_{SL}} \times \sqrt{V_{SH}}} \quad \cdots (7)$$

The meanings and values of variables are as illustrated below.

L: Amount (mL) of low polar solvent (n-hexane) titrated

H: Amount (mL) of highly polar solvent (water) titrated

$\phi_{SL}$: Volume fraction of dissolution solvent (THF) based on sum of dissolution solvent (THF) and titration solvent (n-hexane)

$\phi_L$: Volume fraction of titration solvent (n-hexane) based on sum of dissolution solvent (THF) and titration solvent (n-hexane)

$\phi_{SH}$: Volume fraction of dissolution solvent (THF) based on sum of dissolution solvent (THF) and titration solvent (ion exchange water)

$\phi_H$: Volume fraction of titration solvent (ion exchange water) based on sum of dissolution solvent (THF) and titration solvent (ion exchange water)

$V_S$: Molecular volume [mL/mol] of dissolution solvent (THF) = 81.0

$V_L$: Molecular volume [mL/mol] of titration solvent (n-hexane) = 132

$V_H$: Molecular volume [mL/mol] of titration solvent (ion exchange water) = 18.0

$\delta_S$: SP value of dissolution solvent (THF) $[(cal/cm^3)^{1/2}]$ = 9.54$\delta_L$: SP value$[(cal/cm^3)^{1/2}]$ of titration solvent (n-hexane) = 7.24$\delta_H$: SP value $[(cal/cm^3)^{1/2}]$ of a titration solvent (ion exchange water) = 23.5$\delta$: SP value $[(cal/cm^3)^{1/2}]$ of resin particle.

In the case of a resin particle that has an SP value of 9.0 [(cal/cm$^3$)$^{1/2}$] or less and is poorly dissolved in THF, p-xylene or toluene may be used instead of THF as a solvent in which a dry resin particle sample is dissolved. In this case, variables are changed as illustrated below.

$\phi_{SL}$: Volume fraction of dissolution solvent (p-xylene/toluene) based on sum of dissolution solvent (p-xylene/toluene) and titration solvent (n-hexane)

$\phi_L$: Volume fraction of titration solvent (n-hexane) based on sum of dissolution solvent (p-xylene/toluene) and titration solvent (n-hexane)

$\phi_{SH}$: Volume fraction of dissolution solvent (p-xylene/toluene) based on sum of dissolution solvent (p-xylene/toluene) and titration solvent (ion exchange water)

$\phi_H$: Volume fraction of titration solvent (ion exchange water) based on sum of dissolution solvent (p-xylene/toluene) and titration solvent (ion exchange water)

$V_S$: molecular volume [mL/mol] of dissolution solvent (p-xylene/toluene) = 123/106

$\delta_S$: SP value [(cal/cm$^3$)$^{1/2}$] of dissolution solvent (p-xylene/toluene) = 8.80/8.91

The amount of surface anionic functional groups of a resin particle can be 0.39 mmol/g or less. The optical density of images to record can be raised and colorability can be further enhanced by using a resin particle the amount of surface anionic functional groups of which is 0.39 mmol/g or less. When the amount of surface anionic functional groups of a resin particle is more than 0.39 mmol/g, the optical density of images to record on plain paper may decrease a little.

The amount of surface anionic functional groups of a resin particle can be measured by colloid titration. In the Examples mentioned later, a potential difference automatic titrator (trade name "AT-510", manufactured by Kyoto Electronics Manufacturing Co., Ltd.) provided with a flow potential titration unit (trade name "PCD-500") was used, and the amount of surface anionic functional groups of a resin particle was measured by colloid titration using potential difference. Methyl glycol chitosan was used as a titration reagent.

To measure the amount of surface anionic functional groups of a resin particle in an ink containing a pigment, it is necessary to separate the pigment and the resin particle. The ink is centrifuged, for example, under conditions of 23°C, 440,000 G and 2 hours, and a supernatant in which resin particles are contained is collected. The amount of surface anionic functional groups can be measured by the above-mentioned measuring method.

The content (% by mass) of a resin particle in an ink is preferably 1.0% by mass or more and 7.0% by mass or less, and more preferably 3.0% by mass or more and 5.0% by mass or less based on the total mass of the ink. Fixability and intermittent ejection ability can be realized at a higher level by adjusting the content of a resin particle in the above-mentioned range.

(Color Material)

An ink of the present invention is a colored ink containing a color material. Dyes and pigments can be used as color materials. As the dyes and the pigments, conventionally well-known dyes and pigments that have been used for inkjet inks can be used. Not only conventionally well-known dyes and pigments but also dyes and pigments that were newly discovered or synthesized can also be used.

[Dye]

Although the molecular structures of dyes or the like are not particularly limited, water-soluble dyes can be used. For example, yellow dyes, magenta dyes, cyan dyes and black dyes given below can suitably be used.

Examples of the yellow dyes include:

(1) acid dyes such as C. I. acid yellows 1, 3, 7, 11, 17, 23, 25, 29, 36, 38, 40, 42, 44, 76, 98 and 99;
(2) direct dyes such as C. I. direct yellows 8, 11, 12, 27, 28, 33, 39, 44, 50, 58, 85, 86, 87, 88, 89, 98, 100, 110, 132 and 142;
(3) reactive dyes such as C. I. reactive yellows 2, 3, 17, 25, 37 and 42; and
(4) a food color such as C. I. food yellow 3.

Examples of the magenta dyes include:

(1) acid dyes such as C. I. acid reds 6, 8, 9, 13, 14, 18, 26, 27, 32, 35, 37, 42, 51, 52, 80, 83, 87, 89, 92, 106, 114, 115, 133, 134, 145, 158, 198, 249, 265 and 289;
(2) direct dyes such as C. I. direct reds 2, 4, 9, 11, 20, 23, 24, 31, 39, 46, 62, 75, 79, 80, 83, 89, 95, 197, 201, 218, 220, 224, 225, 226, 227, 228, 229 and 230;

(3) reactive dyes such as C. I. reactive reds 7, 12, 13, 15, 17, 20, 23, 24, 31, 42, 45, 46 and 59; and

(4) food colors such as C. I. food reds 87, 92 and 94.

Examples of the cyan dyes include:

(1) acid dyes such as C. I. acid blues 1, 7, 9, 15, 22, 23, 25, 29, 40, 43, 59, 62, 74, 78, 80, 90, 100, 102, 104, 117, 127, 138, 158 and 161;

(2) direct dyes such as C. I. direct blues 1, 15, 22, 25, 41, 76, 77, 80, 86, 87, 90, 98, 106, 108, 120, 158, 163, 168, 199 and 226; and

(3) reactive dyes such as C. I. reactive blues 4, 5, 7, 13, 14, 15, 18, 19, 21, 26, 27, 29, 32, 38, 40, 44 and 100.

Examples of black dyes include:

(1) acid dyes such as C. I. acid blacks 2, 48, 51, 52, 110, 115 and 156;

(2) direct dyes such as C. I. direct blacks 17, 19, 22, 31, 32, 51, 62, 71, 74, 112, 113, 154, 168 and 195;

(3) reactive dyes such as C. I. reactive blacks 1, 8, 12 and 13; and

(4) food colors such as C. I. food blacks 1 and 2.

Besides the above, for example, C. I. direct violet 107 (direct dye), which is a violet dye, can also be used.

[Pigment]

Either of an inorganic pigment and an organic pigment may be used as a pigment. The pigment may be a natural pigment or a synthetic pigment.

Examples of the inorganic pigment include silica, alumina hydrate, titanium oxide, iron oxide and carbon black. The carbon black includes furnace black, lampblack, acetylene black and channel black.

Examples of the organic pigments include:

(1) azo pigments such as an azo lake, an insoluble azo pigment, a condensation azo pigment, and a chelate azo pigment;

(2) polycyclic pigments such as a phthalocyanine pigment, a perylene and perinone pigment, an anthraquinone pigment, a quinacridone pigment, a dioxazine pigment, a thioindigo pigment, an isoindolinone pigment, and a quinophthalone pigment;

(3) dye lake such as basic dye lake and acidic dye lake;

(4) pigments other than above-mentioned (1) to (3) such as a nitro pigment, a nitroso pigment, aniline black and a daylight fluorescent pigment.

When organic pigments are illustrated by color index (C. I.) numbers, examples of the organic pigments include

(1) yellow pigments such as C. I. pigment yellows 74, 93, 109, 110, 128 and 138;

(2) magenta pigments such as C. I. pigment reds 122, 202 and 209;

(3) cyan pigments such as C. I. pigment blues 15:3 and 60;

(4) black pigments such as C. I. pigment black 7;

(5) orange pigments such as C. I. pigment oranges 36 and 43; and

(6) green pigments such as C. I. pigment greens 7 and 36. However, when a pigment can be dispersed in water, the pigment can be used even though the pigment is a pigment that is not described on the color index.

When the ink of the present invention is prepared, wet cakes and slurry and the like of pigments besides dry pigments in the forms of powder, granules, limps and the like can be used.

A pigment may be either of a self-dispersible pigment and a resin dispersible pigment. However, a self-dispersible pigment can be used.

The self-dispersible pigment can be prepared by bonding dispersibility-imparting groups to the surface of the particle of the pigment directly or indirectly through connection groups such as alkyl groups, alkyl ether groups, and aryl groups. Even though a dispersant is not added to the self-dispersible pigment separately, the self-dispersible pigment can be dispersed in an aqueous solvent.

Examples of the types of dispersibility-imparting groups bonded to the surface of the particle of the pigment include, but are not particularly limited to, a carboxy group (-COOH), a ketone group (-CO), a hydroxyl group (-OH), a

sulfonic acid group ($-SO_3H$) and a phosphate group ($-PO_3H_2$).

The mean particle size of the self-dispersible pigment can be 50 nm or more and 250 nm or less. The preservation stability of the ink is enhanced, and the clogging of nozzles can further be suppressed at the same time by using a self-dispersible pigment having a mean particle size in the above-mentioned range. The mean particle size of the self-dispersible pigment can be measured by a particle size distribution meter using dynamic light scattering. An example of the particle size distribution meter includes a particle size analyzer for dense dispersions (trade name "F-PAR1000", manufactured by Otsuka Electronics Co., Ltd.).

For example, a self-dispersible black pigment, a self-dispersible cyan pigment, a self-dispersible magenta pigment and a self-dispersible yellow pigment can be used as self-dispersible pigments. Examples of the self-dispersible black pigment include, under the following trade names, CAB-O-JET 400, 300 and 200 (the above are manufactured by Cabot Corporation). Examples of the self-dispersible cyan pigment include, under the following trade names, CAB-O-JET 250C, 450C and 554B (the above are manufactured by Cabot Corporation). Examples of the self-dispersible magenta pigment include, under the following trade names, CAB-O-JET 260M, 265M and 465M (the above are manufactured by Cabot Corporation).

Examples of the self-dispersible yellow pigment include, under the following trade names, CAB-O-JET 270Y, 470Y and 740Y (the above are manufactured by Cabot Corporation).

The content of a color material in the ink may not be particularly limited, and may be properly determined depending on the type of the color material, the demand characteristics of the ink, and the like. The content of the color material in the ink can be specifically 1.0% by mass or more and 7.0% by mass or less based on the total mass of the ink. The optical density of an image to record can be further increased by adjusting the content of the color material to 1.0% by mass or more. The preservability and ejection ability of the ink can be further increased by adjusting the content of the color material to 7.0% by mass or less.

(Solvent B)

The ink of the present invention can further contain a solvent B that is a so-called easily water-soluble compound (easily water-soluble solvent), which dissolves in water easily. This solvent B is a component that suppresses the evaporation of water, prevents the thickening of the ink due to dryness, and adherence on nozzle tips, and enhances intermittent ejection ability in the same way as the above-mentioned solvent A. Because the moisture retention (hydration ability) of the solvent B is high, the evaporation of water in the ink can be suppressed, and the thickening of the ink due to dryness and the adherence of the ink to nozzles can be prevented. For this reason, an ink can be ejected more stably over a still longer period of time, and the intermittent ejection ability can be further enhanced at the same time by containing the solvent B. Because the affinity of the solvent B for a color material is also high, the solvent B can enhance the dispersion stability of the ink. The water solubility of the solvent B at 20°C is 20% by mass or more. A polyhydric alcohol and ureas can be used as a solvent B.

The polyhydric alcohol is a compound having a structure in which two or more hydrogen atoms constituting a linear or branched aliphatic hydrocarbon are substituted with the hydroxyl groups (alkane polyol). A condensation product of the alkane polyol (diethylene glycol or the like) and a compound in which ether oxygen atoms of this condensation product are substituted with sulfur atoms (thiodiglycol or the like) are included in the polyhydric alcohol. Among polyhydric alcohols, polyhydric alcohols used as water-soluble organic solvents can be used.

Examples of the polyhydric alcohols include alkanediols such as ethylene glycol (ethanediol), propanediols (1,2- and 1,3-) and butanediols (1,2-, 1,3- and 1,4-), pentanediols (1,2-, 1,3-, 1,4- and 1,5-), and hexanediols (1,2-, 1,3-, 1,4-, 1,5- and 1,6-); alkanetriols such as glycerin, 1,2,6-hexanetriol; and condensation products of alkane polyols such as diethylene glycol, triethylene glycol, tetraethylene glycol, dipropylene glycol, tripropylene glycol, polyethylene glycols, polypropylene glycol and thiodiglycol. At least one selected from the group consisting of glycerin, triethylene glycol, ethylene glycol, diethylene glycol, propylene glycol, methyl Carbitol, 2-pyrrolidone and Carbitol can be used as a solvent B.

Ureas are compounds having a urea skeleton (structure in which two nitrogen atoms are bonded to both ends of a carbonyl carbon). Examples of ureas include ethylene urea besides urea. Although these compounds are solid water-soluble compounds at 20°C, the compounds exhibit the same effect as polyhydric alcohols by dissolving in water.

The content (% by mass) of the solvent B in the ink can be 5.0% by mass or more and 12.0% by mass or less based on the total mass of the ink.

(Water)

The ink of the present invention is an aqueous ink containing water as a medium. Deionized water (ion exchange water) can be used as water. The content (% by mass) of water in the ink is preferably 70% by mass or more and 90% by mass or less based on the total mass of the ink, and more preferably 72% by mass or more and 89% by mass or less.

(Other Additives)

The ink of the present invention can contain additives other than the above-mentioned components if needed. Examples of such additives include a surfactant, an antifungal agent, a surface tension adjuster, a pH adjuster, an antirust, an antiseptic, an antioxidant, a reduction inhibitor and a salt.

Surfactants used for conventional inkjet inks can be used as surfactants. The content (% by mass) of the surfactant in the ink is preferably 0.05% by mass or more and 2% by mass or less, and more preferably 0.05% by mass or more and 1% by mass or less based on the total mass of the ink. The wettability of the ink in nozzles can be enhanced and ejection stability can be further enhanced by adjusting the content of the surfactant to 0.05% by mass or more. An increase in the viscosity of the ink from which water evaporates at nozzle tips can be further reduced, and intermittent ejection ability can be further enhanced by adjusting the content of the surfactant to 2% by mass or less.

A nonionic surfactant, an anionic surfactant, a fluorine-based surfactant, an acetylene glycol-based surfactant, a silicon-based surfactant or the like can be used as a surfactant.

Examples of the nonionic surfactant include, under the following trade names, EMULGEN 103, EMULGEN 108, EMULGEN 123P, AMIET and EMASOL (the above are manufactured by Kao Corporation); NOIGEN, EPAN and SORGEN (the above are manufactured by DKS Co. Ltd.); and NAROACTY, EMULMIN and SANNONIC (the above are manufactured by Sanyo Chemical Industries, Ltd.).

Examples of the anionic surfactant include, under the following trade names, EMAL, LATEMUL, PELEX, NEOPELEX and DEMOL (the above are manufactured by Kao Corporation); and SANNOL, LIPOLAN, LIPON, LIPAL (the above are manufactured by Lion Specialty Chemicals Co., Ltd.).

Examples of the fluorine-based surfactant include, under the following trade names, MEGAFACE F-114, F-410, F-440, F-447, F-553, and F-556 (the above are manufactured by DIC Corporation); and SURFLON S-211, S-221, S-231, S-233, S-241, S-242, S-243, S-420, S-661, S-651 and S-386 (the above are manufactured by AGC SEIMI CHEMICAL CO., LTD.).

Examples of the acetylene glycol-based surfactant include, under the following trade names, Surfynol 104, 82, 420, 440, 465, and 485, TG, 2502, Dynol 604, Dynol 607 and Dynol 800 (the above are manufactured by Air Products and Chemicals, Inc.); OLFINE E1004, E1010, PD004 and EXP4300 (the above are manufactured by Nissin Chemical co., ltd.); and ACETYLENOL EH, E40, E60, E81, E100 and E200 (the above are manufactured by Kawaken Fine Chemicals Co., Ltd.).

Examples of the silicon-based surfactant include, under the following trade names, FZ-2122, FZ-2110, FZ-7006, FZ-2166, FZ-2164, FZ-7001, FZ-2120, SH 8400, FZ-7002, FZ-2104, 8029 ADDITIVE, 8032 ADDITIVE, 57 ADDITIVE, 67 ADDITIVE and 8616 ADDITIVE(the above are manufactured by Dow Corning Toray Co., Ltd.); KF-6012, KF-6015, KF-6004, KF-6013, KF-6011, KF-6043 and KP-104, 110, 112, 323, 341 and 6004 (the above are manufactured by Shin-Etsu Chemical Co., Ltd.); and BYK-300/302, BYK-306, BYK-307, BYK-320, BYK-325, BYK-330, BYK-331, BYK-333, BYK-337, BYK-341, BYK-344, BYK-345/346, BYK-347, BYK-348, BYK-375, BYK-377, BYK-378, BYK-UV3500, BYK-UV3510, BYK-310, BYK-315, BYK-370, BYK-UV3570, BYK-322, BYK-323, BYK-350, BYK-352, BYK-354, BYK-355, BYK-358N/361N, BYK-380N, BYK-381, BYK-392, BYK-340, BYK-Silclean3700, and BYK-Dynwet800 (the above are manufactured by BYK Japan KK). These surfactants can be used alone or in combination of two or more.

For example, benzisothiazolin-3-one (trade name "PROXEL XL-2 (S)", manufactured by Lonza Japan) can be used as the antifungal agent. The content (% by mass) of the antifungal agent in the ink can be 0.01% by mass or more and 0.1% by mass or less based on the total mass of the ink.

For example, 1,2-hexanediol can be used as the surface-tension adjuster. The content (% by mass) of the surface-tension adjuster in the ink can be 1% by mass or more and 5% by mass or less based on the total mass of the ink.

<Ink Cartridge>

An ink cartridge of the present invention includes: an ink-containing part for containing an ink. The aqueous ink of the present invention described above is contained in this ink-containing part. Examples of the form of the ink cartridge include (i) a form in which an ink is contained in the ink-containing part directly and (ii) a form in which members and a mechanism for generating negative pressure are stored in the ink-containing part and an ink is held and contained by these members and the like. Examples of the (ii) form further include (ii-1) a form in which the members and the mechanism for generating negative pressure are stored in the whole ink-containing part and (ii-2) a form in which the inside of the ink-containing part is divided into a chamber for containing the ink directly and a chamber for storing the members and the like for generating negative pressure.

In the (i) form, a recording head and the ink-containing part are linked by ink supply members such as a tube, and the ink is fed to a recording head using water head difference, a pump or the like. The ink cartridge of the (ii) form is detachably connected to the top of a recording head, and the ink is fed to a recording head using the negative pressure generated by the members and the like for generating negative pressure. An ink cartridge integrated with a recording head is also included in the concept of the ink cartridge of the present invention.

<Image Recording Method>

An image recording method has: an ink-applying step of ejecting the aqueous ink of the present invention described above from an inkjet recording head and applying the aqueous ink to a recording medium conveyed under the recording head. The image recording method of the present invention can further have a conveyance step of conveying a recording medium and a heating step of heating the recording medium to which the ink was applied.

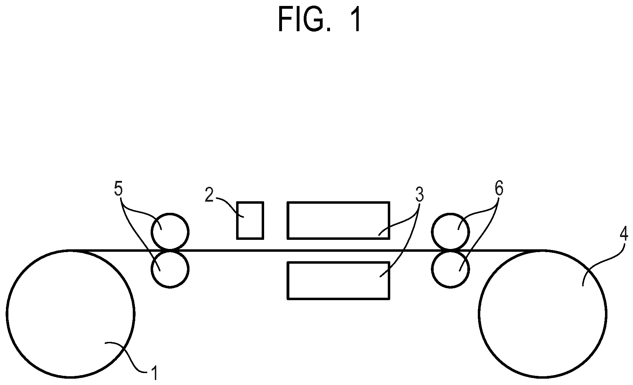

FIG. 1 is a schematic diagram illustrating an example of an image recording apparatus used in an image recording method of the present invention. In the image-recording apparatus illustrated in FIG. 1, a recording medium wound in the shape of a roll is used, and the recording medium on which images are recorded is rewound in the shape of a roll. That is, the image recording apparatus illustrated in FIG. 1 includes: a recording medium-feeding unit 1, an ink-applying unit 2, a heating unit 3 and a recording medium-collecting unit 4. The recording medium-feeding unit 1 is a unit for holding and feeding the recording medium wound in the shape of a roll. The ink-applying unit 2 is a unit for applying the ink to the recording medium sent out of the recording medium-feeding unit 1. The heating unit 3 is a unit for heating the recording medium to which the ink is applied. The recording medium-collecting unit 4 is a unit for winding the recording medium to which the ink is applied and on which images are recorded. A recording medium is conveyed along a conveyance path illustrated as the solid line in FIG. 1 by a conveyance unit including conveyance members such as a roller pair (conveyance rollers 5 and 6) and a belt, and is treated in the units. The recording medium wound in the shape of a roll by the recording medium-collecting unit 4 may be fed to another apparatus or the like and subjected to treatments such as cutting the recording medium to a desired size or binding books.

The conveyance speed of the recording medium in the conveyance step can be 50 m/min or more, and further can be 100 m/min or more. In the conveyance step, tension can be applied to the recording medium. That is, the image recording apparatus can be provided with a tension-applying unit for producing tension. Specifically, the tension-applying part for applying tension to the recording medium, the tension-adjusting part for adjusting the tension of a recording medium, and the like can be provided in the conveyance mechanism between the recording medium-feeding unit 1 and the recording medium-collecting unit 4 (FIG. 1). When tension is applied (exerted) to the recording medium, the deformation (curl, cockling and the like) of the recording medium during recording and after drying can be prevented effectively. Tension applied to the recording medium can be 20 N/m or more and 100 N/m or less.

(Ink-Applying step)

An ink-applying step is a step of applying an ink to a recording medium. An inkjet system is adopted as a system for applying an ink to a recording medium. That is, an image recording method of the present invention is an ink jet recording method. The inkjet system may be a thermal inkjet system or a piezoelectric inkjet system. The thermal inkjet system is a system for applying thermal energy to an ink and ejecting the ink from ejection ports of a recording head. The piezoelectric inkjet system is a system for ejecting an ink from ejection ports of a recording head using piezoelectric elements.

The recording head may be a serial type recording head or a full line type recording head. The serial type recording head is a recording head for moving a recording head in a direction across the conveyance direction of a recording medium, scanning and recording images. The full line type recording head is a recording head in which a plurality of nozzles are arranged in a range covering the maximum width of a recording medium. Because images can be recorded at higher speed, the full line type inkjet recording head can be used. The nozzle line of the full line type inkjet recording head can be arranged in the direction orthogonal to the conveyance direction of a recording medium. A plurality of full line type inkjet recording heads can be usually provided for ink colors, and the recording heads can be arranged in order in parallel along the conveyance direction of a recording medium at the same time. A clear ink is usually further applied to colored inks previously applied to the recording medium.

(Heating Step)

A heating step is a step of heating so that the surface temperature of the recording medium to which an ink is applied is 70°C or more. "The surface temperature of a recording medium to which an ink is applied" in the present invention means the surface temperature of the recording medium at the position where the recording medium is conveyed for 0.5 seconds when the time the ink is applied to the recording medium is defined as 0 seconds. For example, the conveyance speed of a recording medium is assumed to be "V" m/min. In the case of such assumption, the surface temperature of an ink application region X in the recording medium at a position where the application region X is moved through "(V × 0.5)/60" m along the conveyance direction from a position where the ink is applied may be measured. "A position where ink is applied" in the case of a full line type inkjet recording head means a position directly under the recording head. In Examples, the surface temperature of the recording medium was measured from a position 10 cm away from the surface in a nearly perpendicular direction using a non-contact infrared thermometer (trade name "digital radiation temperature sensor FT-H20", manufactured by KEYENCE CORPORATION).

When the recording medium is heated, the recording medium may be pressurized, for example, using a pressurizing roller. The fixability of images can be enhanced by pressurizing the recording medium. When the recording medium is pressurized, the recording medium does not need to be pressurized over all the process of the heating step, and the recording medium may be pressurized only in a partial process of the heating step. A recording medium may be pressurized in a multistage, and the method may further have a pressurization step after the heating step.

(Recording Medium)

All the recording media generally used conventionally can be used as recording media. Examples of the recording media include plain paper and glossy paper, which are permeable recording media, print paper, which is a poorly permeable recording medium, glass, plastic and films, which are impermeable recording media.

A recording media may be beforehand cut to a desired size, and may be a continuous sheet wound in the shape of a roll and be cut to a desired size after image recording. Because it is easy to apply tension, especially a continuous recording medium wound in the shape of a roll can be used.

According to the present invention, an aqueous ink that is excellent in intermittent ejection ability and fixability and enables recording images excellent in colorability can be provided. According to the present invention, an ink cartridge and an image recording method, using the aqueous ink can be provided.

[Examples]

The present invention will be described still more specifically by mentioning Examples and Comparative Examples. However, the present invention is not limited at all by the following Examples as long as the present invention does not exceed the gist thereof. As to the amounts of components, "part" and "%" are based on mass unless otherwise specified.

<Preparation of Ink>

(Ink 1)

A container was charged with 33.5 parts of an aqueous magenta pigment dispersion (solid content: 14.9%), 8.0 parts of 2-phenoxyethanol, 5.0 parts of propylene glycol, 18.0 parts of a dispersion (solid content: 27.8%) of a vinyl chloride resin particle, and 0.2 parts of a surfactant. As the aqueous magenta pigment dispersion, a product having a trade name "CAB-O-JET 465M" (manufactured by Cabot Corporation) was used. As the dispersion of the vinyl chloride resin particle, a product having a trade name "VINYBLAN 755" (manufactured by Nissin Chemical Industry Co., Ltd.) was used. As the surfactant, an acetylene glycol-based surfactant (a trade name "Dynol 800", manufactured by Air Products and Chemicals, Inc.) was used. The total amount was adjusted to 100 parts by adding pure water (ion exchange water) thereto. The mixture was stirred for 30 minutes and filtered with a membrane filter having a pore size of 1 μm to prepare an ink 1. The water solubility of the solvent A (2-phenoxyethanol) in the prepared ink 1 was 2.7%, and the value of "the content (%) of the solvent A/the water solubility (%) of the solvent A" was 3.0.

(Ink 2 to 46)

Inks 2 to 46 were prepared in the same way as in the case of the above-mentioned ink 1 except that the compositions thereof were the compositions illustrated in the upper rows (unit: part) of Tables 2-1 to 2-3, 3-1 and 3-2. The values of the water solubility of the solvent A in the prepared inks and "the content (%) of the solvent A/the water solubility (%) of the solvent A" are illustrated in the lower rows of Tables 2-1 to 2-3, 3-1 and 3-2. The details of the used components are illustrated below.

[Pigment]

COJ465M: Aqueous magenta pigment dispersion (trade name "CAB-O-JET 465M", manufactured by Cabot Corporation, solid content: 14.9%)
COJ400: Aqueous black pigment dispersion (trade name "CAB-O-JET400", manufactured by Cabot Corporation, solid content: 14.9%)

[Surfactant]

Dynol 800: Acetylene glycol-based surfactant (manufactured by Air Products and Chemicals, Inc.)
ACETYLENOL E40: Acetylene glycol-based surfactant (manufactured by Kawaken Fine Chemicals Co., Ltd.)

[Resin Particle]

VINYBLAN 755: Vinyl chloride resin particle (manufactured by Nissin Chemical Industry Co., Ltd., SP value: 9.7 $(cal/cm^3)^{0.5}$, amount of surface anionic functional groups: 0.36 mmol/g)
LM61: Chloroprene resin particle (manufactured by Denka Company Limited, SP value: 8.3 $(cal/cm^3)^{0.5}$, amount of surface anionic functional groups: 0.052 mmol/g)
LV60N: Chloroprene resin particle (manufactured by Denka Company Limited, SP value: 9.2 $(cal/cm^3)^{0.5}$, amount of surface anionic functional groups: 0.037 mmol/g)
ZAIKTHENE L: Polyolefin resin particle (manufactured by Sumitomo Seika Chemicals Company Limited, SP value: 9.7 $(cal/cm^3)^{0.5}$, amount of surface anionic functional groups: 0.59 mmol/g)
TAKELAC W5661: Polyurethane resin particle (manufactured by Mitsui Chemicals, Inc., SP value: 10.3 $(cal/cm^3)^{0.5}$, amount of surface anionic functional groups: 0.39 mmol/g)

Table 2-1: Composition of ink

| | | Ink | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Pigment | COJ465M | 5.0 | 5.0 | 5.0 | 5.0 | 5.0 | 5.0 | 5.0 | 5.0 | 5.0 | 5.0 | 5.0 |
| | COJ400 | | | | | | | | | | | |
| Surfactant | Dynol 800 | 0.2 | 0.2 | 0.2 | 0.2 | 0.2 | 0.2 | 0.2 | 0.2 | 0.2 | 0.2 | 0.2 |
| | ACETYLENOL E40 | | | | | | | | | | | |
| Solvent A | 2-Phenoxyethanol | 8.0 | 18.9 | 1.9 | 8.0 | 8.0 | 8.0 | 8.0 | 8.0 | 8.0 | 8.0 | |
| | 1-Phenoxy-2-propanol | | | | | | | | | | | 3.3 |
| | Benzyl alcohol | | | | | | | | | | | |
| | Phenethyl alcohol | | | | | | | | | | | |
| | 3-Phenyl-1-propanol | | | | | | | | | | | |
| Solvent B | Propylene glycol | 5.0 | 5.0 | 5.0 | 5.0 | 5.0 | 5.0 | 12.0 | 5.0 | 5.0 | 5.0 | 5.0 |
| | Glycerin | | | | | | | | | | | |
| | Triethylene glycol | | | | | | | | | | | |
| | Ethylene glycol | | | | | | | | | | | |
| | Diethylene glycol | | | | | | | | | | | |
| | 2-Pyrrolidone | | | | | | | | | | | |
| | Carbitol | | | | | | | | | | | |

(continued)

| | | Ink | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Resin particle | VINYBLAN 755 | 5.0 | 5.0 | 5.0 | 7.0 | 3.0 | 1.0 | 5.0 | | | | 5.0 |
| | LM61 | | | | | | | | 3.0 | | | |
| | LV60N | | | | | | | | | 3.0 | | |
| | ZAIKTHENE L | | | | | | | | | | 5.0 | |
| | TAKELAC W5661 | | | | | | | | | | | |
| Water solubility (% by mass) of solvent A | | 2.7 | 2.7 | 2.7 | 2.7 | 2.7 | 2.7 | 2.7 | 2.7 | 2.7 | 2.7 | 1.1 |
| Content (% by mass) of Solvent A/ water solubility (% by mass) of Solvent A | | 3.0 | 7.0 | 0.7 | 3.0 | 3.0 | 3.0 | 3.0 | 3.0 | 3.0 | 3.0 | 3.0 |

Table 2-2: Composition of ink

| | | Ink | | | | | | | | | | | |
|---|---|---|---|---|---|---|---|---|---|---|---|---|---|
| | | 12 | 13 | 14 | 15 | 16 | 17 | 18 | 19 | 20 | 21 | 22 | 23 |
| Pigment | COJ465M | 5.0 | 5.0 | 5.0 | 5.0 | 5.0 | 5.0 | 5.0 | 5.0 | 5.0 | 5.0 | 5.0 | 5.0 |
| | COJ400 | | | | | | | | | | | | |
| Surfactant | Dynol 800 | 0.2 | 0.2 | 0.2 | 0.2 | 0.2 | 0.2 | 0.2 | 0.2 | 0.2 | 0.2 | 0.2 | 0.2 |
| | ACETYLENOL E40 | | | | | | | | | | | | |
| Solvent A | 2-Phenoxyethanol | | | | | | | | | | | | 8.0 |
| | 1-Phenoxy-2-propanol | 7.7 | 0.8 | 3.3 | 3.3 | 3.3 | | | | 3.3 | 3.3 | 3.3 | |
| | Benzyl alcohol | | | | | | 12.9 | | | | | | |
| | Phenethyl alcohol | | | | | | | 6.0 | | | | | |
| | 3-Phenyl-1-propanol | | | | | | | | 3.0 | | | | |
| Solvent B | Propylene glycol | 5.0 | 5.0 | 5.0 | 5.0 | 5.0 | 5.0 | 5.0 | 5.0 | 5.0 | 5.0 | 5.0 | |
| | Glycerin | | | | | | | | | | | | 5.0 |
| | Triethylene glycol | | | | | | | | | | | | |
| | Ethylene glycol | | | | | | | | | | | | |
| | Diethylene glycol | | | | | | | | | | | | |
| | 2-Pyrrolidone | | | | | | | | | | | | |
| | Carbitol | | | | | | | | | | | | |
| Resin particle | VINYBLAN 755 | 5.0 | 5.0 | 7.0 | 3.0 | 1.0 | 5.0 | 5.0 | 5.0 | | | | 5.0 |
| | LM61 | | | | | | | | | 3.0 | | | |
| | LV60N | | | | | | | | | | 3.0 | | |
| | ZAIKTHENE L | | | | | | | | | | | 5.0 | |
| | TAKELAC W5661 | | | | | | | | | | | | |
| Water solubility (% by mass) of solvent A | | 1.1 | 1.1 | 1.1 | 1.1 | 1.1 | 4.3 | 2.2 | 0.57 | 1.1 | 1.1 | 1.1 | 2.7 |
| Content (% by mass) of Solvent A/water solubility (% by mass) of Solvent A | | 7.0 | 0.7 | 3.0 | 3.0 | 3.0 | 3.0 | 2.7 | 5.3 | 3.0 | 3.0 | 3.0 | 3.0 |

Table 2-3: Composition of ink

| | | Ink | | | | | | |
| | | 24 | 25 | 26 | 27 | 28 | 29 | 30 |
|---|---|---|---|---|---|---|---|---|
| Pigment | COJ465M | 5.0 | 5.0 | 5.0 | 5.0 | 5.0 | 5.0 | |
| | COJ400 | | | | | | | 5.0 |
| Surfactant | Dynol 800 | | 0.2 | 0.2 | 0.2 | 0.2 | 0.2 | 0.2 |
| | ACETYLENOL E40 | 0.1 | | | | | | |
| Solvent A | 2-Phenoxyethanol | 8.0 | 8.0 | 8.0 | 8.0 | 8.0 | 8.0 | 8.0 |
| | 1-Phenoxy-2-propanol | | | | | | | |
| | Benzyl alcohol | | | | | | | |
| | Phenethyl alcohol | | | | | | | |
| | 3-Phenyl-1-propanol | | | | | | | |
| Solvent B | Propylene glycol | | | | | | | 5.0 |
| | Glycerin | 5.0 | | | | | | |
| | Triethylene glycol | | 5.0 | | | | | |
| | Ethylene glycol | | | 5.0 | | | | |
| | Diethylene glycol | | | | 5.0 | | | |
| | 2-Pyrrolidone | | | | | 5.0 | | |
| | Carbitol | | | | | | 5.0 | |
| Resin particle | VINYBLAN 755 | 5.0 | 5.0 | 5.0 | 5.0 | 5.0 | 5.0 | 5.0 |
| | LM61 | | | | | | | |
| | LV60N | | | | | | | |
| | ZAIKTHENE L | | | | | | | |
| | TAKELAC W5661 | | | | | | | |
| Water solubility (% by mass) of solvent A | | 2.7 | 2.7 | 2.7 | 2.7 | 2.7 | 2.7 | 2.7 |
| Content (% by mass) of Solvent A/water solubility (% by mass) of Solvent A | | 3.0 | 3.0 | 3.0 | 3.0 | 3.0 | 3.0 | 3.0 |

Table 3-1: Composition of ink

| | | Ink | | | | | | | | | |
| | | 31 | 32 | 33 | 34 | 35 | 36 | 37 | 38 | 39 | 40 |
|---|---|---|---|---|---|---|---|---|---|---|---|
| Pigment | COJ465M | 5.0 | 5.0 | 5.0 | 5.0 | 5.0 | 5.0 | 5.0 | 5.0 | 5.0 | 5.0 |
| | COJ400 | | | | | | | | | | |
| Surfactant | Dynol 800 | 0.2 | 0.2 | 0.2 | 0.2 | 0.2 | 0.2 | 0.2 | 0.2 | 0.2 | 0.2 |
| | ACETYLENOL E40 | | | | | | | | | | |

(continued)

| | | Ink | | | | | | | | | |
|---|---|---|---|---|---|---|---|---|---|---|---|
| | | 31 | 32 | 33 | 34 | 35 | 36 | 37 | 38 | 39 | 40 |
| Solvent A | 2-Phenoxyethanol | 8.0 | 18.9 | | | 1.4 | 1.4 | 1.4 | 1.4 | | |
| | 1-Phenoxy-2-propanol | | | 3.3 | 7.7 | | | | | 0.6 | 0.6 |
| | Benzyl alcohol | | | | | | | | | | |
| | Phenethyl alcohol | | | | | | | | | | |
| | 3-Phenyl-1-propanol | | | | | | | | | | |
| Solvent B | Propylene glycol | 5.0 | 5.0 | 5.0 | 5.0 | 5.0 | 5.0 | 5.0 | 5.0 | 5.0 | 5.0 |
| | Glycerin | | | | | | | | | | |
| | Triethylene glycol | | | | | | | | | | |
| | Ethylene glycol | | | | | | | | | | |
| | Diethylene glycol | | | | | | | | | | |
| | 2-Pyrrolidone | | | | | | | | | | |
| | Carbitol | | | | | | | | | | |
| Resin particle | VINYBLAN 755 | | | | | 5.0 | | | | 5.0 | |
| | LM61 | | | | | | 5.0 | | | | 5.0 |
| | LV60N | | | | | | | 5.0 | | | |
| | ZAIKTHENE L | | | | | | | | 5.0 | | |
| | TAKELAC W5661 | 5.0 | 5.0 | 5.0 | 5.0 | | | | | | |
| Water solubility (% by mass) of solvent A | | 2.7 | 2.7 | 1.1 | 1.1 | 2.7 | 2.7 | 2.7 | 2.7 | 1.1 | 1.1 |
| Content (% by mass) of Solvent A/water solubility (% by mass) of Solvent A | | 3.0 | 7.0 | 3.0 | 7.0 | 0.5 | 0.5 | 0.5 | 0.5 | 0.5 | 0.5 |

Table 3-2: Composition of ink

| | | Ink | | | | | |
|---|---|---|---|---|---|---|---|
| | | 41 | 42 | 43 | 44 | 45 | 46 |
| Pigment | COJ465M | 5.0 | 5.0 | 3.0 | 3.0 | 5.0 | |
| | COJ400 | | | | | | 5.0 |
| Surfactant | Dynol 800 | 0.2 | 0.2 | 0.2 | 0.2 | 0.2 | 0.2 |
| | ACETYLENOL E40 | | | | | | |
| Solvent A | 2-Phenoxyethanol | | | | | 8.0 | 8.0 |
| | 1-Phenoxy-2-propanol | 0.6 | 0.6 | 2.5 | 2.5 | | |
| | Benzyl alcohol | | | | | | |
| | Phenethyl alcohol | | | | | | |
| | 3-Phenyl-1-propanol | | | | | | |

(continued)

| | | Ink | | | | | |
|---|---|---|---|---|---|---|---|
| | | 41 | 42 | 43 | 44 | 45 | 46 |
| Solvent B | Propylene glycol | 5.0 | 5.0 | | | 5.0 | 5.0 |
| | Glycerin | | | 2.5 | 2.5 | | |
| | Triethylene glycol | | | | | | |
| | Ethylene glycol | | | | | | |
| | Diethylene glycol | | | | | | |
| | 2-Pyrrolidone | | | | | | |
| | Carbitol | | | | | | |
| Resin particle | VINYBLAN 755 | | | | | | |
| | LM61 | | | | | | |
| | LV60N | 5.0 | | | | | |
| | ZAIKTHENE L | | 5.0 | | | | |
| | TAKELAC W5661 | | | | 5.0 | | 5.0 |
| Water solubility (% by mass) of solvent A | | 1.1 | 1.1 | 1.1 | 1.1 | 2.7 | 2.7 |
| Content (% by mass) of Solvent A/water solubility (% by mass) of Solvent A | | 0.5 | 0.5 | 2.3 | 2.3 | 3.0 | 3.0 |

<Evaluation>

(Record of Image)

An inkjet recording apparatus provided with a recording head having a configuration illustrated in FIG. 1 was provided. Images were recorded using a recording head (trade name "KJ4", manufactured by KYOCERA Corporation, nozzle density 600 dpi) in a piezoelectric inkjet system as the recording head. An ink was stored in an ink tank connected to the recording head through a tube. The recording conditions were a temperature of 25°C, relative humidity of 55% and an ink ejection frequency of 39 kHz. The conveyance speed of a recording medium was 75 m/min, and the ejection volume of the ink per dot was around 13 pL. The ratio of the conveyance speed of a recording medium to the recording resolution (the conveyance speed/the recording resolution) was 0.125 m/min·dpi, and the amount of an ink applied per $cm^2$ was 0.8 mg. In the above-mentioned inkjet recording apparatus, conditions under which 1 dot of 13 ng of an ink droplet is applied to a unit region, which is 1/600 inches × 1/600 inches, at a resolution of 600 dpi × 600 dpi are defined as being "a recording duty of 100%". The surface temperature of the recording medium to which the ink was applied was measured from a position 10 cm away from the surface of the recording medium in a nearly perpendicular direction using the non-contact infrared thermometer (trade name "digital radiation temperature sensor FT-H20", manufactured by KEYENCE CORPORATION).

(Intermittent Ejection Ability)

An image of a size of 1 inch × 1 inch was recorded on high-quality paper (trade name "OK prince high-quality", manufactured by Oji Paper Co., Ltd., basis weight 64 $g/m^2$, thickness 0.07 mm) using the above-mentioned inkjet recording apparatus. The inkjet recording apparatus was stopped for a predetermined period, and the ink was then ejected only once from the nozzles of the recording head. When the ink was ejected normally, a line having the same length of 1 inch as a nozzle line is recorded. The recorded line was observed visually, and intermittent ejection ability was evaluated according to an evaluation standard illustrated below. In an evaluation standard illustrated below, "A", "B" and "C" were defined as preferable levels, and "D" was defined as an unacceptable level. Results are illustrated in Tables 4 and 5.

A: An ink was normally ejected from more than half of all the nozzles even though the quiescent period was 10 minutes or more.
B: An ink was normally ejected from more than half of all the nozzles even though the quiescent period was less than 10 minutes and 120 seconds or more.

C: An ink was normally ejected from more than half of all the nozzles when the quiescent period became 60 seconds or more.

D: An ink was not normally ejected from more than half of all the nozzles (resulting in being much twisted or no ejection) when the quiescent period became 15 seconds or more.

(Fixability)

Images including solid images having a size of 20 cm × 20 cm and non-printing areas extending in the conveyance direction of the recording medium and having a width of 10 cm were continuously recorded on high-quality paper for 1 hour using the above-mentioned inkjet recording apparatus. High-quality paper having a trade name "OK prince high-quality" (manufactured by Oji Paper Co., Ltd., basis weight 64 g/m$^2$, thickness 0.07 mm) was used. The surface of a conveyance roller 6 (refer to FIG. 1) was observed after recording, and the fixability of an ink was evaluated according to an evaluation standard illustrated below. In the evaluation standard illustrated below, "AA", "A" and "B" were defined as preferable levels, and "C" was defined as an unacceptable level. Results are illustrated in Tables 4 and 5.

AA: Discoloration did not occur on the surface of the conveyance roller.

A: Although discoloration having a width of 20 cm was seen very slightly on the surface of the conveyance roller, the boundary thereof could not be seen.

B: Thin discoloration having a width of 20 cm is present on the surface of the conveyance roller, the boundary thereof could be seen faintly.

C: Deep discoloration having a width of 20 cm is present on the surface of the conveyance roller, the boundary thereof could be seen clearly. Additionally, the non-printing areas were discolored.

(Colorability)

A solid image having a size of 20 cm × 20 cm was recorded on high-quality paper (trade name "Digi Laser", manufactured by UPM Paper Inc., basis weight 80 g/m$^2$, and thickness 0.07 mm) using the above-mentioned inkjet recording apparatus. The optical density of the recorded solid image was measured using a reflection density meter (trade name "RD19I", manufactured by GretagMacbeth AG), and the optical density of the image was evaluated according to an evaluation standard illustrated below. In the evaluation standard illustrated below, "A" and "B" were defined as preferable levels, and "C" was defined as an unacceptable level. Results are illustrated in Tables 4 and 5.

A: The optical density was 1.1 or more.

B: The optical density was 1.0 or more and less than 1.1.

C: The optical density was less than 1.0.

Table 4: Recording condition and evaluation results

| | Type of ink | Recording condition | Evaluation results | | |
|---|---|---|---|---|---|
| | | Surface temperature(°C) of recording medium to which ink was applied | Intermittent ejection ability | Fixability | Colorability |
| Example 1 | 1 | 25 | A | A | A |
| Example 2 | 1 | 70 | A | AA | A |
| Example 3 | 2 | 25 | A | A | A |
| Example 4 | 3 | 25 | A | A | A |
| Example 5 | 4 | 25 | B | A | A |
| Example 6 | 5 | 25 | A | A | A |
| Example 7 | 6 | 25 | A | B | A |
| Example 8 | 7 | 25 | A | A | A |
| Example 9 | 8 | 25 | A | A | A |

(continued)

|  | Type of ink | Recording condition | Evaluation results | | |
| --- | --- | --- | --- | --- | --- |
|  |  | Surface temperature(°C) of recording medium to which ink was applied | Intermittent ejection ability | Fixability | Colorability |
| Example 10 | 9 | 25 | A | A | A |
| Example 11 | 10 | 25 | A | A | B |
| Example 12 | 11 | 25 | A | A | A |
| Example 13 | 12 | 25 | A | A | A |
| Example 14 | 13 | 25 | B | A | A |
| Example 15 | 14 | 25 | A | A | A |
| Example 16 | 15 | 25 | A | A | A |
| Example 17 | 16 | 25 | A | A | A |
| Example 18 | 17 | 25 | A | A | A |
| Example 19 | 18 | 25 | A | A | A |
| Example 20 | 19 | 25 | A | A | A |
| Example 21 | 20 | 25 | A | A | A |
| Example 22 | 21 | 25 | A | A | A |
| Example 23 | 22 | 25 | A | A | B |
| Example 24 | 23 | 25 | A | A | A |
| Example 25 | 24 | 25 | A | A | A |
| Example 26 | 25 | 25 | A | A | A |
| Example 27 | 26 | 25 | A | A | A |
| Example 28 | 27 | 25 | A | A | A |
| Example 29 | 28 | 25 | A | A | A |
| Example 30 | 29 | 25 | A | A | A |
| Example 31 | 30 | 25 | A | A | A |

Table 5: Recording condition and evaluation results

|  | Type of ink | Recording condition | Evaluation results | | |
| --- | --- | --- | --- | --- | --- |
|  |  | Surface temperature(°C) of recording medium to which ink was applied | Intermittent ejection ability | Fixability | Colorability |
| Comparative Example 1 | 31 | 25 | D | A | A |
| Comparative Example 2 | 32 | 25 | D | A | A |
| Comparative Example 3 | 33 | 25 | D | A | A |
| Comparative Example 4 | 34 | 25 | D | A | A |
| Comparative Example 5 | 35 | 25 | D | A | A |

(continued)

| | Type of ink | Recording condition | Evaluation results | | |
|---|---|---|---|---|---|
| | | Surface temperature(°C) of recording medium to which ink was applied | Intermittent ejection ability | Fixability | Colorability |
| Comparative Example 6 | 36 | 25 | D | A | A |
| Comparative Example 7 | 37 | 25 | D | A | A |
| Comparative Example 8 | 38 | 25 | D | A | B |
| Comparative Example 9 | 39 | 25 | D | A | A |
| Comparative Example 10 | 40 | 25 | D | A | A |
| Comparative Example 11 | 41 | 25 | D | A | A |
| Comparative Example 12 | 42 | 25 | D | A | B |
| Comparative Example 13 | 43 | 25 | A | C | A |
| Comparative Example 14 | 44 | 25 | D | A | A |
| Comparative Example 15 | 45 | 25 | A | C | A |
| Comparative Example 16 | 45 | 70 | A | C | A |
| Comparative Example 17 | 46 | 25 | D | A | A |

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An aqueous inkjet ink of the present invention contains: a solvent A; a resin particle; and a color material, wherein the solvent A is an alcohol having a water solubility at 20°C of 5% by mass or less, the vapor pressure at 20°C of 0.5 mmHg or less, and the surface tension at 20°C of 30 mN/m or more; the ratio of the content (% by mass) of the solvent A to the water solubility (% by mass) of the solvent A at 20°C is 0.7 or more and 7.0 or less; and the SP value of the resin particle is 8.1 $(cal/cm^3)^{0.5}$ or more and 9.7 $(cal/cm^3)^{0.5}$ or less.

**Claims**

1. An aqueous inkjet ink comprising: a solvent A; a resin particle; and a color material,

   wherein the solvent A is an alcohol having a water solubility at 20°C of 5% by mass or less, a vapor pressure at 20°C of 0.5 mmHg or less, and surface tension at 20°C of 30 mN/m or more;
   a ratio of a content (% by mass) of the solvent A to the water solubility (% by mass) of the solvent A at 20°C is 0.7 or more and 7.0 or less; and
   an SP value of the resin particle is 8.1 $(cal/cm^3)^{0.5}$ or more and 9.7 $(cal/cm^3)^{0.5}$ or less.

2. The aqueous ink according to claim 1, wherein the solvent A is a monohydric alcohol having a benzene ring.

3. The aqueous ink according to claim 1 or 2, wherein the water solubility of the solvent A at 20°C is 3% by mass or less.

4. The aqueous ink according to any one of claims 1 to 3, wherein the solvent A is at least one selected from the group consisting of benzyl alcohol, 2-phenoxyethanol, phenethyl alcohol, 1-phenoxy-2-propanol and 1-phenyl-2-propanol.

5. The aqueous ink according to any one of claims 1 to 4, further comprising: a solvent B, wherein the solvent B is at least one selected from the group consisting of glycerin, triethylene glycol, ethylene glycol, diethylene glycol, propylene glycol, methyl Carbitol, 2-pyrrolidone and Carbitol.

6. The aqueous ink according to any one of claims 1 to 5, wherein a content (% by mass) of the resin particle is 1.0% by mass or more and 7.0% by mass or less based on a total mass of the ink.

7. The aqueous ink according to any one of claims 1 to 6, wherein the ratio of the content (% by mass) of the solvent A to the water solubility (% by mass) of the solvent A at 20°C is 1.0 or more and 5.0 or less.

8. The aqueous ink according to any one of claims 1 to 7, wherein an amount of surface anionic functional groups of the resin particle is 0.39 mmol/g or less.

9. The aqueous ink according to any one of claims 1 to 8, wherein the color material is a self-dispersible pigment.

10. An ink cartridge comprising: an ink; and an ink-containing part for containing the ink,
wherein the ink is the aqueous ink according to any one of claims 1 to 9.

11. An image recording method comprising: ejecting the aqueous ink according to any one of claims 1 to 9 from an inkjet recording head; and applying the aqueous ink to a recording medium conveyed under the recording head.

# FIG. 1

FIG. 2

Europäisches
Patentamt

European
Patent Office

Office européen
des brevets

# EUROPEAN SEARCH REPORT

**Application Number**

EP 18 17 8976

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/78876 A1 (AVECIA LTD [GB]; SHAWCROSS ANDREW PAUL [GB]; HOLBROOK MARK [GB]; EWING) 28 December 2000 (2000-12-28) | 1,2,4-8, 10,11 | INV.<br>C09D11/033<br>C09D11/10 |
| Y | * page 13, lines 1-14; claims 1-3,10,12-14; tables 1,5 *<br>* page 14, line 7 - page 15, line 4 * | 9 | C09D11/30<br>C09D11/32<br>C09D11/322 |
| A | JP 2009 083314 A (FUJIFILM CORP) 23 April 2009 (2009-04-23)<br>* paragraphs [0156], [0158], [0159], [0161], [0199], [0202], [0203], [0223], [0227], [0228], [0234]; claims 1,3,6 * | 1-11 | |
| Y | JP 2009 242603 A (FUJIFILM CORP) 22 October 2009 (2009-10-22) | 9 | |
| A | * paragraphs [0028], [0031], [0033], [0047], [0054]; claim 6 * | 1-8,10, 11 | |
| Y | US 2010/173079 A1 (AKIYAMA RYOZO [JP] ET AL) 8 July 2010 (2010-07-08) | 9 | TECHNICAL FIELDS SEARCHED (IPC) |
| A | * paragraphs [0049], [0056] - [0059], [0071], [0083]; claims 1,3,8,9,17-19; tables 2,4,7 * | 1-8,10, 11 | C09D |

The present search report has been drawn up for all claims

| Place of search | Date of completion of the search | Examiner |
|---|---|---|
| Munich | 22 October 2018 | Feldmann, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 17 8976

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2018

| Patent document cited in search report | | Publication date | Patent family member(s) | | Publication date |
|---|---|---|---|---|---|
| WO 0078876 | A1 | 28-12-2000 | AT | 299920 T | 15-08-2005 |
| | | | AU | 5545200 A | 09-01-2001 |
| | | | DE | 60021386 D1 | 25-08-2005 |
| | | | EP | 1194490 A1 | 10-04-2002 |
| | | | JP | 2003503535 A | 28-01-2003 |
| | | | WO | 0078876 A1 | 28-12-2000 |
| JP 2009083314 | A | 23-04-2009 | NONE | | |
| JP 2009242603 | A | 22-10-2009 | NONE | | |
| US 2010173079 | A1 | 08-07-2010 | JP | 2010155989 A | 15-07-2010 |
| | | | US | 2010173079 A1 | 08-07-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H03255171 B
- JP 2000297237 A
- JP 2015007175 A
- JP 5196235 B

**Non-patent literature cited in the description**

- **K. W. SUH ; D. H. CLARKE.** *J. Polym. Sci.,* 1967, 1671
- **K. W. SUH ; J. M. CORBETT.** *J. Appl. Poym. Sci.,* 1968, 2359